# EUROPEAN PATENT APPLICATION

(11) **EP 4 276 337 A1**
(43) Date of publication of application: **15.11.2023**
(21) Application number: 22736605.1
(22) Date of filing: 07.01.2022
(51) Int. Cl.: F16K 31/06

(54) **SOLENOID VALVE**

(30) Priority: 08.01.2021 CN 202120054506 U; 08.01.2021 CN 202110026492
(71) Applicant: Zhejiang Dunan Artificial Environment Co., Ltd., Shaoxing, Zhejiang 311835 (CN)
(72) Inventor: YU, Zhou, Shaoxing, Zhejiang 311835 (CN); MA, Yanting, Shaoxing, Zhejiang 311835 (CN); LIN, Yuanyang, Shaoxing, Zhejiang 311835 (CN)
(74) Representative: Berggren Oy
(86) International application number: PCT/CN2022/070795
(87) International publication number: WO 2022/148444

(57) **Abstract**

Disclosed is a solenoid valve, including a valve seat (10), the valve seat (10) is provided with an inlet (11), an outlet (12) and a valve cavity (13) communicated with the inlet (11) and the outlet (12); a core iron (20), movably disposed in the valve cavity (13), and a riveting cavity (21) is disposed in the core iron; and a steel ball (30), the steel ball (30) is movably disposed in the riveting cavity along the axial direction of the valve seat (10). The technical problem that a solenoid valve in the relevant art has a small valve pressure difference may be solved.

## Description

### Cross-Reference to Related Application

This present disclosure claims priority to Chinese patent application No. 202120054506.6 filed to the China National Intellectual Property Administration on January 8, 2021 and entitled "Solenoid Valve" and Chinese patent application No. 202110026492.1 filed to the China National Intellectual Property Administration on January 8, 2021 and entitled "Solenoid Valve", the disclosure of which is hereby incorporated by reference in its entirety.

### Technical Field

The disclosure relates to a technical field of solenoid Valves, in particular to a solenoid valve.

### Background

At present, a solenoid valve in the art known to inventors generally includes a valve seat, a core iron component, an inlet connection pipe and an outlet connection pipe, the valve seat is provided with an inlet, an outlet and a valve cavity communicated with the inlet and the outlet, the core iron component is movably disposed in the valve cavity, the inlet connection pipe is disposed at the inlet, and the outlet connection pipe is disposed at the outlet. And the core iron component includes a core iron and a steel ball.

However, the solenoid valve in the art known to inventors has a small valve pressure difference, which is not favorable for reducing the minimum actuation voltage.

### Summary

A main objective of this present disclosure is to provide a solenoid valve, for solving the technical problem that a solenoid valve in the art known to inventors has a small valve pressure difference.

In order to achieve the above purpose, the disclosure provides a solenoid valve, including: a valve seat, provided with an inlet, an outlet and a valve cavity communicated with the inlet and the outlet; a core iron, movably disposed in the valve cavity, and a riveting cavity is disposed in the core iron; and a steel ball, movably disposed in the riveting cavity along an axial direction of the valve seat.

In some embodiments, the steel ball has a first abutting position and a second abutting position which are abutted with the riveting cavity, a height difference between the first abutting position and the second abutting position is h, and 0.3mm≤h≤0.5mmm.

In some embodiments, riveting cavity is a conical cavity.

In some embodiments, the core iron is further provided with a balance hole, the balance hole extends along a radial direction of the valve seat, and the balance hole communicates with the riveting cavity.

In some embodiments, the solenoid valve further includes: a valve port seat, disposed at the outlet of the valve seat, and a communicating channel communicated with the valve cavity is disposed in the valve port seat; the valve port seat is provided with a connecting end and a supporting end which are disposed oppositely, the supporting end is disposed in the valve cavity, the connecting end extends out of the valve seat, a first positioning step is disposed between the connecting end and the supporting end, and the first positioning step is configured to being abutted and positioned with the outlet of the valve seat.

In some embodiments, the first positioning step includes a first positioning surface and a second positioning surface which are connected with each other, an opening of the valve seat is provided with a positioning inner wall and a positioning side wall which are connected with each other, the first positioning surface is in attach positioning with the positioning inner wall, at least part of the second positioning surface is in attach positioning with the positioning side wall, and the second positioning surface is disposed by protruding out of the positioning side wall.

In some embodiments, the second positioning surface includes a first matching ring surface and a second matching ring surface which are disposed in a connection manner along the axial direction of the valve seat, the first matching ring surface is in interference fit with the positioning side wall, and the second matching ring surface is disposed at intervals with the positioning side wall to allow a solder enters a gap between the second matching ring surface and the positioning side wall.

In some embodiments, the solenoid valve further includes a first connection pipe, the first connection pipe is connected with the connecting end of the valve port seat, and the valve seat, the valve port seat and the first connection pipe are connected through a same welding line.

In some embodiments, the valve port seat is further provided with a second positioning step, the second positioning step is disposed on one side, close to the connecting end, of the first positioning step, and the solenoid valve further includes: a first connection pipe in positioning fit with the second positioning step.

In some embodiments, the second positioning step further includes a third positioning surface and fourth positioning surface, the third positioning surface is in attach positioning with an end portion of first connection pipe, and at least part of the fourth positioning surface is in interference fit with an inner wall of the first connection pipe.

In some embodiments, the solenoid valve further includes: a sleeve, which sleeves the valve seat, a wall thickness of the sleeve is δ₁ and 0.45mm≤δ₁≤0.6mm.

In some embodiments, the solenoid valve further includes: a connector pipe, disposed at the inlet and/or the outlet; a outer diameter of the connector pipe is d, and d≤8mm; the connector pipe is made of red copper, a wall thickness of the connector pipe is δ₂, and 1mm≤δ₂≤1.25mm.; the connector pipe is made of a steel material, a wall thickness of the connector pipe is δ₂, and 0.5mm≤δ2≤1mm.

In some embodiments, one end of the sleeve is welded on the valve seat; the sleeve and the valve seat are welded through a first welding line, a welding depth of the first welding line is δ₃, and δ₃/δ₁≥0.5.

In some embodiments, the solenoid valve further includes: an attractor, disposed at an other end of the sleeve.

In some embodiments, the other end of the sleeve is welded on the attractor; the sleeve and the attractor are welded through a second welding line, a welding depth of the second welding line is δ₄, and b₄/δ₁≥0.5.

With the adoption of the technical solution of the disclosure, the steel ball is movably disposed in the riveting cavity along the axial direction of the valve seat, so that the steel ball have a certain distance difference along the axial direction of the valve seat in the riveting cavity, which can greatly improve the opening valve pressure difference, increase the reliability of work, and reduce the minimum actuation voltage. Therefore, through the technical solution provided by embodiments of the disclosure, the technical problem that the solenoid valve in the art known to inventors has a small valve pressure difference can be solved.

### Brief Description of the Drawings

The drawings forming a part of the disclosure in the specification are adopted to provide a further understanding to the disclosure. Schematic embodiments of the disclosure and descriptions thereof are adopted to explain the disclosure and not intended to form improper limits to the disclosure. In the drawings:
Fig. 1 illustrates a schematic structure diagram of a solenoid valve provided by an embodiment of the disclosure.
Fig. 2 illustrates an enlarged schematic diagram of A in Fig. 1.
Fig. 3 illustrates a schematic structure diagram when a steel ball is located at a first abutting position provided by an embodiment of the disclosure.
Fig. 4 illustrates a schematic structure diagram when a steel ball is located at a second abutting position provided by an embodiment of the disclosure.
Fig. 5 illustrates a schematic structure diagram showing a height difference between a first abutting position and a second abutting position of a steel ball provided by an embodiment of the disclosure.
Fig. 6 illustrates a schematic structure diagram of partial size of a solenoid valve provided by an embodiment of the disclosure.

The above figures the following reference numerals:
10. Valve seat; 11. Inlet; 12. Outlet; 13. Valve cavity; 20. Core iron; 21, Riveting cavity; 22. Balance hole; 30. Steel ball; 40. Valve port seat; 41. Communicating channel; 42. First positioning step; 421. First positioning surface; 422. Second positioning surface; 4221. First matching ring surface; 4222. Second matching ring surface; 43. Second positioning step; 431. Third positioning surface; 432. Fourth positioning surface; 51. First connection pipe; 52. Second connection pipe; 60. Attractor; 70. Return spring; 80. Sleeve; and 90. Shading Coil.

### Detailed Description of the Embodiments

It is to be noted that the embodiments and features in the embodiments of the disclosure may be combined with each other without conflict. The disclosure will be described in detail below with reference to the accompanying drawings and the embodiments.

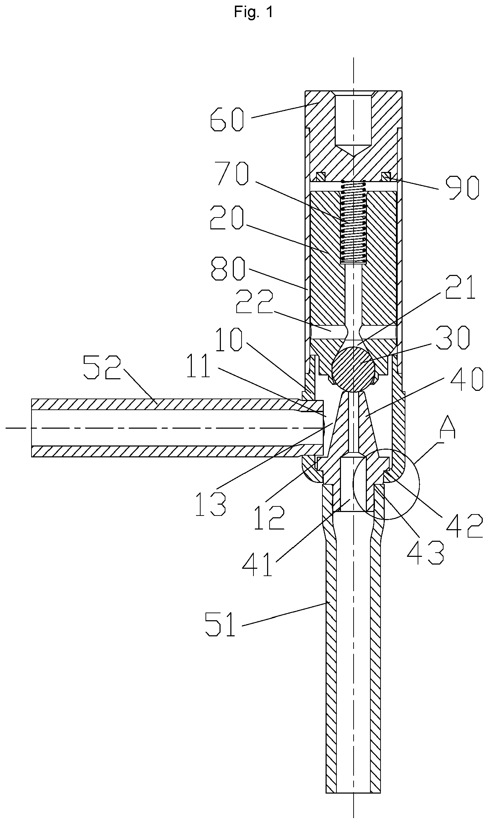

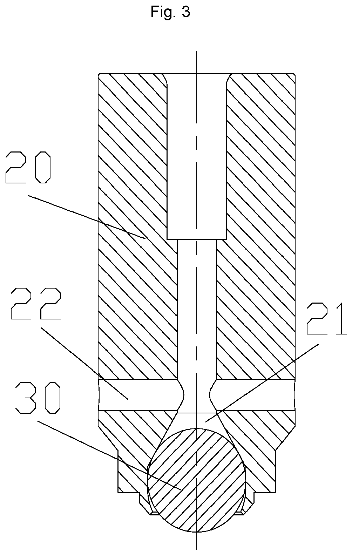

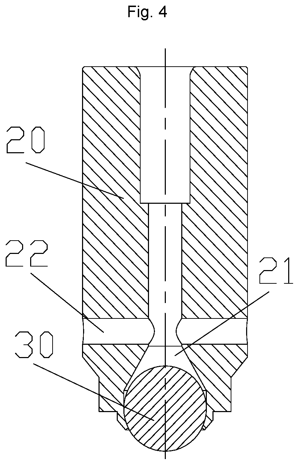

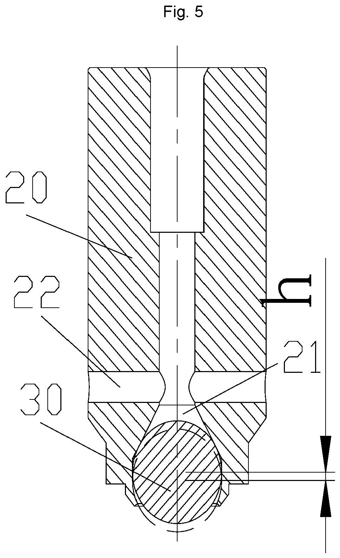

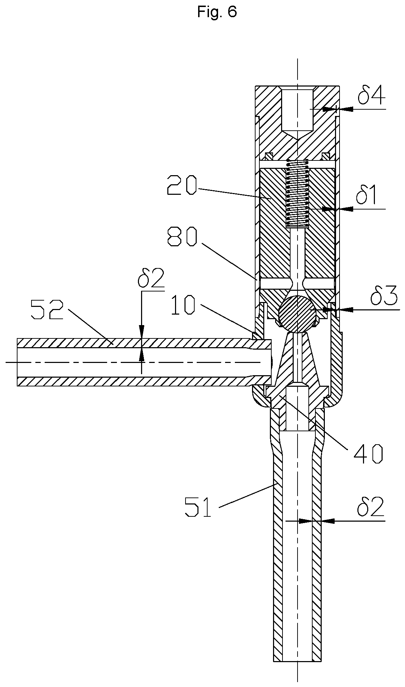

As shown in Figs. 1-6, some embodiments of the present disclosure provides a solenoid valve, including: a valve seat 10, a core iron 20, a steel ball 30, an attractor 60, a return spring 70, a sleeve 80 and a shading coil 90, wherein the valve seat 10 is provided with an inlet 11, an outlet 12 and a valve cavity 13 communicated with the inlet 11 and the outlet 12. The core iron 20 movably disposed in the valve cavity 13, and a riveting cavity 21 is disposed in the core iron 20. The steel ball 30 is movably disposed in the riveting cavity 21 along the axial direction of the valve seat 10, and the steel ball 30 and the valve seat 10 are riveted.

With the adoption of the solenoid valve provided by the embodiment, the steel ball 30 is movably disposed in the riveting cavity 21 along the axial direction of the valve seat 10, so that the steel ball 30 may have a certain distance difference along the axial direction of the valve seat 10 in the riveting cavity 21, which can greatly improve the opening valve pressure difference, increase the reliability of work, and reduce the minimum actuation voltage. Therefore, through the technical solution provided by embodiment, the technical problem that the solenoid valve in the art known to inventors has a small valve pressure difference may be solved.

In some embodiments, the steel ball 30 has a first abutting position and a second abutting position which are abutted with the riveting cavity 21, the height difference between the first abutting position and the second abutting position is h, and 0.3mm≤h≤0.5mmm. By enabling the height difference between the first abutting position and the second abutting position to be set in the above distance range, the opening valve pressure difference can be better improved, the reliability of work can be better increased, and the actuation voltage can be reduced.

In some embodiments, the riveting cavity 21 is a conical cavity, so that the steel ball 30 can smoothly move in the riveting cavity 21, and meanwhile, production and manufacturing are also facilitated.

In some embodiments, the core iron 20 is further provided with a balance hole 22, the balance hole 22 extends along the radial direction of the valve seat 10, and the balance hole 22 communicates with the riveting cavity 21. By adoption of the structural arrangement, a liquid in the riveting cavity 21 can conveniently flow into the balance hole 22. A certain gap is formed between the steel ball 30 and the inner wall of the riveting cavity 21, so that the liquid in the riveting cavity 21 can flow smoothly into the balance hole 22. And the gap between the steel ball 30 and the inner wall of the riveting cavity 21 is not smaller than 0.1 mm.

In some embodiments, the solenoid valve in the embodiment further includes a valve port seat 40, the valve port seat 40 is disposed at the outlet 12 of the valve seat 10, and a communicating channel 41 communicated with the valve cavity 13 is disposed in the valve port seat 40. The valve port seat 40 is provided with a connecting end and a supporting end which are disposed oppositely, the supporting end is disposed in the valve cavity 13, the connecting end extends out of the valve seat 10, a first positioning step 42 is disposed between the connecting end and the supporting end, and the first positioning step 42 is configured to being abutted and positioned with the outlet 12 of the valve seat 10. By adoption of the structural arrangement, by disposing the two parts, namely, the valve seat 10 and the valve port seat 40, the processing difficulty of the valve seat 10 can be reduced, only the valve port seat 40 needs to be installed at the outlet 12 of the valve seat 10, and thus the machining efficiency is also improved.

In some embodiments, the valve port seat 40 includes an inverted conical structure, the valve port seat 40 is provided with a communicating channel, which is configured to communicate with the valve cavity 13. The supporting end is located at the end portion of the inverted conical structure.

In some embodiments, the first positioning step 42 includes a first positioning surface 421 and a second positioning surface 422 which are connected with each other, an opening of the valve seat 10 is provided with a positioning inner wall and a positioning side wall which are connected with each other, the first positioning surface 421 is in attach positioning with the positioning inner wall, at least part of the second positioning surface 422 is in attach positioning with the positioning side wall, and the second positioning surface 422 is disposed by protruding out of the positioning side wall. By adoption of the structural arrangement, the valve seat 10 and the valve port seat 40 can be positioned to improve the stability of disposing. Meanwhile, "the second positioning surface 422 is disposed by protruding out of the positioning side wall" refers to that "the height of the second positioning surface 422 is larger than that of the positioning side wall, so that the second positioning surface 422 is disposed by exposing out of the ground of the valve seat 10", which also facilitates installation.

In some embodiments, the second positioning surface 422 in the embodiment includes a first matching ring surface 4221 and a second matching ring surface 4222 which are disposed in a connection manner along the axial direction of the valve seat 10, the first matching ring surface 4221 is in interference fit with the positioning side wall, and the second matching ring surface 4222 is disposed at intervals with the positioning side wall to allow a solder enters a gap between the second matching ring surface 4222 and the positioning side wall. By adoption of the structural arrangement, welding can be conveniently carried out to improve the stability of welding.

In some embodiments, the solenoid valve further includes a first connection pipe 51, the first connection pipe 51 is connected with the connecting end of the valve port seat 40, and the valve seat 10, the valve port seat 40 and the first connection pipe 51 are connected through a same welding line. By adoption of the structural arrangement, integrated welding can be carried out, thus the welding efficiency is improved, the stability of connection is improved, and the requirement of high pressure of a CO₂ (carbon dioxide) system can be met.

In some embodiments, the valve port seat 40 in the embodiment is further provided with a second positioning step 43, the second positioning step 43 is disposed on one side, close to the connecting end, of the first positioning step 42, and the solenoid valve further includes a first connection pipe 51, and the first connection pipe 51 is in positioning fit with the second positioning step 43. By adoption of the structural arrangement, the first connection pipe 51 can be conveniently connected and positioned to improve the stability of disposing of the first connection pipe 51.

In some embodiments, the second positioning step 43 further includes a third positioning surface 431 and a fourth positioning surface 432, the third positioning surface 431 is in attach positioning with the end portion of first connection pipe 51, and at least part of the fourth positioning surface 432 is in interference fit with the inner wall of the first connection pipe 51. The fourth positioning surface 432 includes a third matching ring surface and a fourth matching ring surface which are disposed in a connection manner along the axial direction of the valve seat 10, the third matching ring surface is in interference fit with the inner wall of the first connection pipe 51, and the fourth matching ring surface is disposed at intervals with the inner wall of the first connection pipe 51 so that the stability of the solenoid valve can be guaranteed, and meanwhile, the solenoid valve also can be conveniently carried out.

In some embodiments, the solenoid valve further includes a second connection pipe 52, and the first connection pipe 52 is connected with the inlet 11 of the valve seat 10. Both the first connection pipe 51 and the second connection pipe 52 are welded to the valve seat 10. The first connection pipe 51 is matched and welded with the valve seat 10 after flaring, and the second connection pipe 52 is matched and welded with the valve seat 10 after contracting.

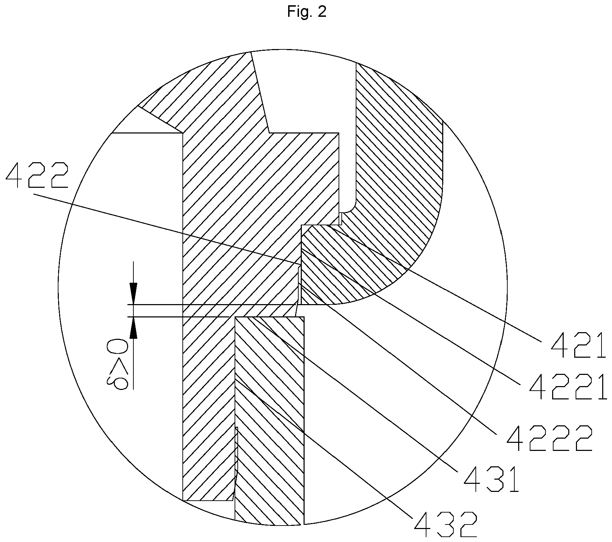

In some embodiments, the valve seat 10 includes the valve port seat 40, the valve seat 10, the inlet connection pipe (the second connection pipe 52) and the outlet connection pipe (the first connection pipe 51), the valve port seat 40 is in interference fit with part of the matching surface of the valve seat 10, and in clearance fit with part of the matching surface to facilitate flowing of a solder, and the valve port seat 40, the valve seat 10, and the outlet connection pipe are in integrated welding and share the same welding line. The valve port seat 40 is provided with a step surface (the first positioning step 42), and the step surface is in limiting match with the valve seat 10; and a valve port is disposed on the valve port seat 40. The valve port seat 40 is exposed of the bottom surface of the valve seat 10 after being in press fit with the valve seat 10, and the distance δ>0; the valve port seat 40 is interference fit with the outlet connection pipe, meanwhile, part of the gap is matched to facilitate flowing of a solder, and the contact end surface of the connection pipe and the valve port seat 40 is exposed of the bottom surface of the valve seat 10, and the distance δ>0 (as shown in Fig. 2). The inlet 11 pipe is matched and welded with the valve seat 10 after contracting; and the outlet 12 pipe is matched and welded with the valve port seat 40 after flaring. The core iron 20 component includes a core iron 20 and a steel ball 30, the steel ball 30 and the core iron 20 are riveted, after riveting, the steel ball 30 and the core iron 20 can move flexibly, and the moving distance h = 0.3 - 0.5.

In some embodiments, the solenoid valve further includes a steel ball 30, the steel ball 30 is movably disposed in the riveting cavity 21, the sleeve 80 sleeves the valve seat 10, the wall thickness of the sleeve 80 is δ₁, and 0.45mm≤δ₁≤0.6mm.

With the adoption of the solenoid valve, the steel ball 30 is movably disposed in the riveting cavity 21, the steel ball 30 moves along the axial direction of the riveting cavity 20, so that the steel ball 30 may have a certain distance difference in the riveting cavity 21, which can greatly improve the valve pressure difference, increase the reliability of work, and reduce the minimum actuation voltage. By setting the wall thickness of the sleeve 80 within the above range, the structural strength of the sleeve 80 can be guaranteed, so as to meet the use condition of a CO₂(carbon dioxide) system, and improve the pressure resistance grade of the solenoid valve . Therefore, through the solenoid valve provided by the utility model, the technical problem that the pressure resistance grade of the solenoid valve in the art known to inventors is not enough can be solved.

In some embodiments, the solenoid valve in the embodiment further includes a connector pipe, disposed at the inlet and/or the outlet. Each of the inlet and the outlet is provided with a connector pipe, so as to facilitate connection with other connecting pipes through the connector pipe. The connector pipe includes a first connection pipe 51 and a second connection pipe 52.

In some embodiments, the outer diameter of the connector pipe is d, and d≤8mm.

In some embodiments, the connector pipe in the embodiment is made of red copper, when the outer diameter of the connector pipe is smaller than or equal to 8 mm, the wall thickness of the connector pipe is δ₂, 1mm≤δ₂≤1.25mm, so as to guarantee the compression strength.

In some embodiments, the connector pipe in the embodiment is made of a steel material, when the outer diameter of the connector pipe is smaller than or equal to 8 mm, the wall thickness of the connector pipe is δ₂, 0.5mm≤δ₂≤1mm, so as to guarantee the compression strength.

In some embodiments, one end of the sleeve 80 is welded to the valve seat10 to improve the connection strength.

In some embodiments, the sleeve 80 and the valve seat 10 are welded through a first welding line, the welding depth of the first welding line is δ₃, and δ₃/δ₁≥0.5. By adoption of the structural arrangement, the strength of welding can be guaranteed so as to guarantee the compression strength.

In some embodiments, the solenoid valve further includes an attractor 60, and the attractor 60 is disposed at the other end of the sleeve 80.

In some embodiments, the other end of the sleeve 80 in the embodiment is welded to the attractor 60 to improve the connection strength.

In some embodiments, the sleeve 80 and the attractor 60 are welded through a second welding line, the welding depth of the second welding line is δ₄, and δ₄/δ₁≥0.5. By adoption of the structural arrangement, the strength of welding can be guaranteed so as to guarantee the compression strength.

From the above description, it can be seen that the above embodiments of the disclosure achieve the following technical effects: the opening valve pressure difference is improved, the reliability of actuation is increased, and the minimum actuation voltage is reduced.

It is to be noted that terms used herein are for the purpose of describing specific implementation modes only and are not intended to be limiting of exemplary implementation modes according to the disclosure. Unless otherwise pointed out explicitly, a singular form used herein is also intended to include a plural form. In addition, it should also be understood that the term "include" and/or "comprise" used in the description indicates that there are features, steps, operations, devices, assemblies and/or combinations thereof.

Unless otherwise specified, relative arrangements of components and steps elaborated in these embodiments, numeric expressions and numeric values do not limit the scope of the disclosure. Furthermore, it should be understood that for ease of descriptions, the size of each part shown in the drawings is not drawn in accordance with an actual proportional relation. Technologies, methods and devices known by those of ordinary skill in the related art may not be discussed in detail. However, where appropriate, the technologies, the methods and the devices shall be regarded as part of the authorized description. In all examples shown and discussed herein, any specific values shall be interpreted as only exemplar values instead of limited values. Therefore, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the descriptions of the disclosure, it will be appreciated that locative or positional relations indicated by "front, back, up, down, left, and right", "horizontal, vertical, perpendicular, and horizontal", "top and bottom" and other terms are locative or positional relations shown on the basis of the drawings, which are only intended to make it convenient to describe the disclosure and to simplify the descriptions without indicating or impliedly indicating that the referring device or element must have a specific location and must be constructed and operated with the specific location, and accordingly it cannot be understood as limitations to the disclosure. The nouns of locality "inner and outer" refer to the inner and outer contours of each component.

For ease of description, spatial relative terms such as "over", "above", "on an upper surface" and "upper" may be used herein for describing a spatial position relation between a device or feature and other devices or features shown in the drawings. It will be appreciated that the spatial relative terms aim to contain different orientations in usage or operation besides the orientations of the devices described in the drawings. For example, if the devices in the drawings are inverted, devices described as "above other devices or structures" or "over other devices or structures" will be located as "below other devices or structures" or "under other devices or structures". Thus, an exemplar term "above" may include two orientations namely "above" and "below". As an alternative, the device may be positioned with other different modes (90° rotation or positioned at other orientations), and the spatial relative description used here needs to be explained correspondingly.

In addition, it is to be noted that terms "first", "second" and the like are used to limit parts, and are only intended to distinguish corresponding parts. If there are no otherwise statements, the above terms do not have special meanings, such that they cannot be understood as limits to the scope of protection of the disclosure.

The foregoing is merely preferred embodiments of the disclosure and is not intended to limit the disclosure, and various modifications and variations of the disclosure may be available for those skilled in the art. Any modifications, equivalent replacements, improvements and the like made within the spirit and principle of the disclosure shall fall within the scope of protection of the disclosure.

## Claims

1. A solenoid valve, comprising:
a valve seat (10), the valve seat (10) is provided with an inlet (11), an outlet (12) and a valve cavity (13) communicated with the inlet (11) and the outlet (12);
a core iron (20), movably disposed in the valve cavity (13), and a riveting cavity (21) is disposed in the core iron (20); and
a steel ball (30), the steel ball (30) is movably disposed in the riveting cavity (21) along an axial direction of the valve seat (10).

2. The solenoid valve as claimed in claim 1, wherein the steel ball (30) has a first abutting position and a second abutting position which are abutted with the riveting cavity (21), a height difference between the first abutting position and the second abutting position is h, and 0.3mm≤h≤0.5mmm.

3. The solenoid valve as claimed in claim 1, wherein the riveting cavity (21) is a conical cavity.

4. The solenoid valve as claimed in claim 1, wherein the core iron (20) is further provided with a balance hole (22), the balance hole (22) extends along a radial direction of the valve seat (10), and the balance hole (22) is communicated with the riveting cavity (21).

5. The solenoid valve as claimed in claim 1, further comprising:
a valve port seat (40), disposed at the outlet (12) of the valve seat (10), and a communicating channel (41) communicated with the valve cavity (13) is disposed in the valve port seat (40); wherein the valve port seat (40) is provided with a connecting end and a supporting end which are disposed oppositely, the supporting end is disposed in the valve cavity (13), the connecting end extends out of the valve seat (10), a first positioning step (42) is disposed between the connecting end and the supporting end, and the first positioning step (42) is configured to be abutted and positioned with the outlet (12) of the valve seat (10).

6. The solenoid valve as claimed in claim 5, wherein the first positioning step (42) comprises a first positioning surface (421) and a second positioning surface (422) which are connected with each other, an opening of the valve seat (10) is provided with a positioning inner wall and a positioning side wall which are connected with each other, the first positioning surface (421) is in attach positioning with the positioning inner wall, at least part of the second positioning surface (422) is in attach positioning with the positioning side wall, and the second positioning surface (422) is disposed by protruding out of the positioning side wall.

7. The solenoid valve as claimed in claim 6, wherein the second positioning surface (422) comprises a first matching ring surface (4221) and a second matching ring surface (4222) which are disposed in a connection manner along the axial direction of the valve seat (10), the first matching ring surface (4221) is in interference fit with the positioning side wall, and the second matching ring surface (4222) is disposed at intervals with the positioning side wall to allow solder enters a gap between the second matching ring surface (4222) and the positioning side wall.

8. The solenoid valve as claimed in claim 7, wherein the solenoid valve further comprises a first connection pipe (51), wherein the first connection pipe (51) is connected with the connecting end of the valve port seat (40), and the valve seat (10), the valve port seat (40) and the first connection pipe (51) are connected through a same welding line.

9. The solenoid valve as claimed in claim 5, wherein the valve port seat (40) is further provided with a second positioning step (43), the second positioning step (43) is disposed on one side, close to the connecting end, of the first positioning step (42), and the solenoid valve further comprises:
a first connection pipe (51), in positioning fit with the second positioning step (43).

10. The solenoid valve as claimed in claim 9, wherein the second positioning step (43) further comprises a third positioning surface (431) and a fourth positioning surface (432), the third positioning surface (431) is in attach positioning with an end portion of first connection pipe (51), and at least part of the fourth positioning surface (432) is in interference fit with an inner wall of the first connection pipe (51).

11. The solenoid valve as claimed in claim 1, further comprising:
a sleeve (80), which sleeves the valve seat (10), a wall thickness of the sleeve (80) is δ₁, and
0.45mm≤δ₁≤0.6mm.

12. The solenoid valve as claimed in claim 11, further comprising:
a connector pipe, disposed at the inlet and/or the outlet.

13. The solenoid valve according to claim 12, wherein an outer diameter of the connector pipe is d, and d≤8mm.

14. The solenoid valve according to claim 13, wherein the connector pipe is made of red copper, a wall thickness of the connector pipe is δ₂, and 1mm≤δ₂≤1.25mm.

15. The solenoid valve according to claim 13, wherein the connector pipe is made of a steel material, a wall thickness of the connector pipe isδ₂, and 0.5mm≤δ₂≤1mm.

16. The solenoid valve as claimed in claim 11, wherein one end of the sleeve (80) is welded to the valve seat (10).

17. The solenoid valve according to claim 11, wherein the sleeve (80) and the valve seat (10) are welded through a first welding line, a welding depth of the first welding line is δ₃, and δ₃/δ₁≥0.5.

18. The solenoid valve as claimed in claim 11, further comprising:
an attractor (60), disposed at an other end of the sleeve (80).

19. The solenoid valve as claimed in claim 18, wherein an other end of the sleeve (80) is welded to the attractor (60).

20. The solenoid valve according to claim 19, wherein the sleeve (80) and the valve seat (60) are welded through a second welding line, a welding depth of the second welding line is δ₄, and δ₄/δ₁≥0.5.
